Europäisches Patentamt

European Patent Office

Office européen des brevets

(19)

(11) Numéro de publication: **0 024 976**
**B1**

(12) **FASCICULE DE BREVET EUROPEEN**

(45) Date de publication du fascicule du brevet: 02.11.83

(51) Int. Cl.³: **B 60 N 1/06**

(21) Numéro de dépôt: **80401183.1**

(22) Date de dépôt: **13.08.80**

(54) **Dispositif de réglage de l'inclinaison relative de deux organes et notamment des deux parties d'un siège de véhicule automobile.**

(30) Priorité: 23.08.79 FR 7921244

(43) Date de publication de la demande:
**11.03.81 Bulletin 81/10**

(45) Mention de la délivrance du brevet:
**02.11.83 Bulletin 83/44**

(84) Etats contractants désignés:
**DE GB NL SE**

(56) Documents cités:
**FR - A - 1 347 823**
**FR - A - 2 364 784**
**GB - A - 1 046 893**
**US - A - 4 082 352**

(73) Titulaire: **CYCLES PEUGEOT Société dite:**
**Beaulieu**
**F-25700 Valentigney (FR)**

(72) Inventeur: **Fourrey, François**
**34 Rue du Petit Chenois**
**F-25200 Montbeliard (FR)**

(74) Mandataire: **Bressand, Georges et al,**
**c/o CABINET LAVOIX 2 Place d'Estienne d'Orves**
**F-75441 Paris Cedex 09 (FR)**

Courier Press, Leamington Spa, England.

Dispositif de réglage de l'inclinaison relative de deux organes et notamment
des deux parties d'un siège du véhicule automobile

Les dossiers de sièges de véhicules sont généralement articulés sur l'assise du siège au moyen d'un dispositif comportant une couronne dentée intérieurement, solidaire de l'organe mobile, c'est-à-dire du dossier, et un cliquet portant une denture extérieure et monté pivotant sur la partie fixe c'est-à-dire, dans le cas d'un siège d'automobile, sur l'assise. Une came maintient le cliquet en prise avec la denture de l'organe mobile et immobilise, par suite, les deux éléments en rotation tandis qu'un levier permet de commander la came et de libérer l'organe mobile.

De tels dispositifs présentent l'inconvénient de ne pas résister d'une manière suffisante aux efforts brusques contre le dossier et, par suite, de permettre un basculement accidentel de ce dernier, ce qui est dangereux pour l'utilisateur.

Par ailleurs, la nécessité de donner à l'axe de pivotement du clapet un diamètre suffisant pour qu'il puisse supporter seul les efforts appliqués à l'organe mobile, conduit à placer cet axe largement à l'intérieur de la couronne dentée de l'organe mobile, ce qui oblige à adopter soit une denture de cliquet engageante qui nécessite un mouvement de rotation de l'organe mobile pour obtenir le verrouillage ou le déverrouillage de l'articulation, soit une denture de cliquet très inclinée, et par conséquent peu résistante, si on veut s'affranchir de ce défaut. Un exemple de dispositif de ce type est décrit dans le brevet FR—A—1.347.823.

Pour renforcer l'articulation on a proposé de combiner la came de verrouillage avec une came de commande et, en outre, de placer des surfaces d'arrêt de part et d'autre du cliquet pour limiter les possibilités de déplacement radial de ce dernier. Par exemple, le dispositif décrit dans le brevet FR—A—2.364.784 comporte un flasque fixe muni d'un logement circulaire, un flasque mobile solidaire d'une couronne dentée intérieurement, s'emboîtant dans le logement du flasque fixe et, entre les flasques, au moins un cliquet pivotant qui présente une forme générale incurvée, de rayon inférieur à celui de la couronne dentée, et des faces latérales extrêmes en arc de cercle, et qui porte une portion de denture en regard de la couronne dentée, à chaque extrémité du cliquet un relief en saillie sur le fond du logement, qui présente des faces de forme correspondant à celles du cliquet, et une came mobile entre une position de verrouillage de l'articulation dans laquelle elle maintient la denture en prise avec la couronne dentée, et une position de réglage dans laquelle elle libère la denture pour permettre le déplacement relatif des flasques.

On réalise donc ainsi un dispositif complexe sans supprimer totalement les risques de détérioration des pièces quie le constituent, lors d'un choc brusque accidentel sur le dossier, et sans supprimer l'apparition dans l'articulation du jeu dû à un dimensionnement insuffisant de l'axe de cliquet.

La présente invention a donc pour but de remédier à ces inconvénients en réalisant un dispositif d'articulation de conception simple, qui présente une grande robustesse et supprime efficacement tout risque de déplacement accidentel du cliquet et donc de déverrouillage de l'articulation.

Cette invention a en effet pour objet un dispositif du type ci-dessus, qui comporte au moins trois reliefs qui délimitent trois surfaces de guidage du pivotement du cliquet, qui sont coaxiales et ont leur centre commun situé sur la périphérie du logement, ou même à l'extérieur de celui-ci, et qui sont constamment en contact respectivement avec trois faces latérales en arc de cercle du cliquet, qui ont le même centre et sont voisines, respectivement, du sommet et des extrémités du cliquet de sorte que ce dernier est maintenu uniquement par emboîtement entre les reliefs et la came et, sous l'action de cette dernière, glisse sur les surfaces de pivotement et pivote autour d'un axe fictif passant par leur centre, entre les positions de verrouillage et de déverrouillage.

Le cliquet étant ainsi simplement maintenu entre les reliefs, sans l'intervention d'aucun axe de fixation sur le flasque, et restant constamment en contact avec ces reliefs et avec la came, non seulement le dispositif ne comporte plus aucune pièce susceptible de se rompre sous l'effet d'un choc ou autre effort brutal, mais le déplacement accidentel du cliquet est pratiquement interdit. Les reliefs sont, en effet, d'une seule pièce avec le flasque fixe ce qui permet de créer des surfaces de réaction nettement plus importantes, plus précises et plus solidaires du flasque fixe que celles obtenues par un axe rapporté, et également de faire tourillonner le cliquet autour d'un axe fictif situé à proximité de la couronne dentée, et de donner aux dentures une inclinaison faible, donc une meilleure résistance aux efforts tangentiels appliqués à celle-ci.

La description ci-dessous d'un mode de réalisation donnée à titre d'exemple non limitatif, et représenté aux dessins annexés, fera d'ailleurs ressortir les avantages et caractéristiques de l'invention.

Sur ces dessins:
— la Fig. 1 est une vue de côté d'un dispositif d'articulation selon l'invention;
— la Fig. 2 est une vue, partie en vue extérieure, partie en coupe, suivant la ligne 2—2 de la figure 1;
— la Fig. 3 est une vue de côté du dispositif de l'articulation avant la mise en place du flasque mobile, les cliquets et la came étant représentés en position déverrouillée;
— la Fig. 4 est une vue analogue à la figure 3, montrant les cliquets et la came en position de verrouillage;

— la Fig. 5 est une vue en plan de la came de verrouillage des cliquets;

— la Fig. 6 est une vue en plan d'un cliquet;

— la Fig. 7 est une vue en coupe suivant la ligne 7—7 d'une portion du flasque fixe portant le pontet de guidage des cliquets;

— la Fig. 8 est une vue en coupe suivant la ligne 8—8 de ce même pontet.

Comme le montrent les dessins, le dispositif d'articulation de l'invention comporte deux flasques 1 et 2, destinés à être fixés respectivement à la partie mobile et à la partie fixe de l'articulation, c'est-à-dire, dans le cas d'un siège de véhicule automobile, au dossier et à l'assise de ce siège. Le flasque 1 qui est mobile, c'est-à-dire fixé au dossier du siège, comporte autour d'une ouverture circulaire une couronne dentée intérieurement 4, qui est légèrement décalée latéralement et délimite ainsi une portée circulaire extérieure 5.

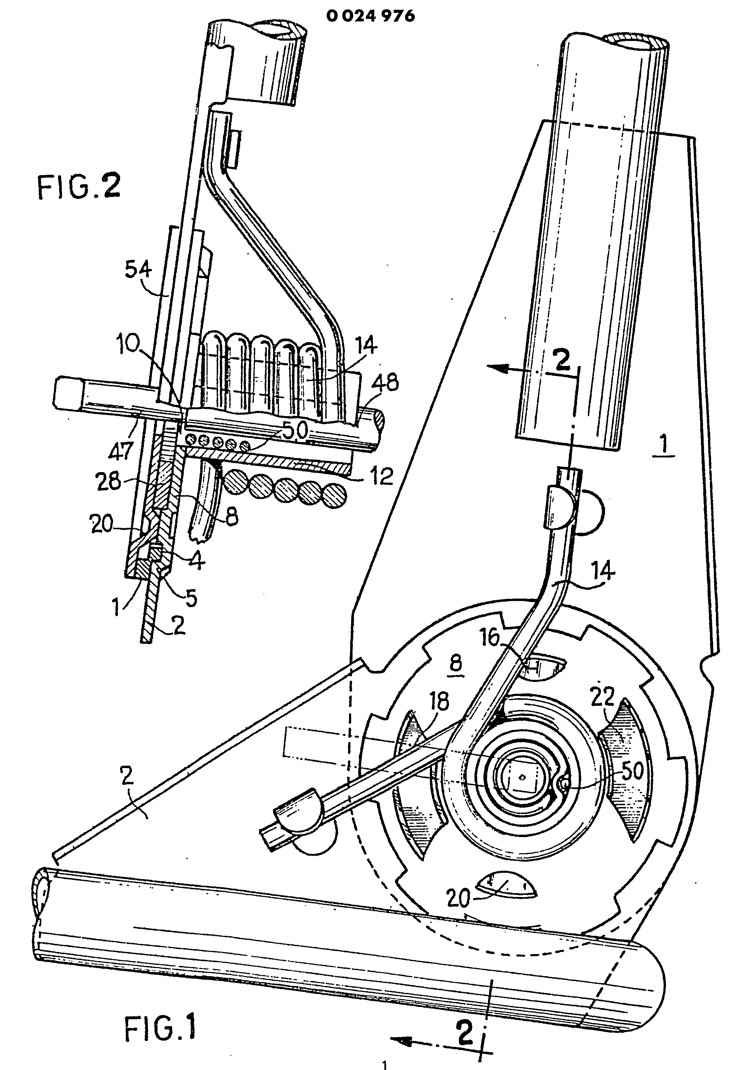

Le flasque fixe 2 destiné à être rendu solidaire de l'assise du siège comporte, lui, un logement circulaire 7 ayant un diamètre sensiblement égal à celui de la portée 5 du flasque 1 et destiné à recevoir la couronne dentée 4, ainsi que le montre la figure 2. Le logement du flasque 2 est fermé par un fond 8, qui est percé d'un orifice central 10 entouré par un tube 12, autour duquel est enroulé un ressort hélicoïdal 14 dont les extrémités sont fixées respectivement sur les flasques 1 et 2 et qui tend à rapprocher les extrémités extérieures de ces flasques l'une de l'autre, c'est-à-dire à rapprocher le dossier de l'assise.

Le fond 8 du logement du flasque 2 comporte des parties embouties formant plusieurs reliefs, quatre dans le mode de réalisation représenté, respectivement 16, 18, 20 et 22, qui font saillie à l'intérieur de ce logement. Ces reliefs sont symétriques deux à deux par rapport au centre du logement 7 et de la couronne dentée 4. Ainsi les deux reliefs 16 et 20, diamétralement opposés, sont délimités latéralement par deux surfaces en arc de cercle, centrées respectivement en des points O et $O_1$ situés à proximité de la périphérie du logement 7, légèrement à l'intérieur ou éventuellement à l'extérieur de celui-ci. Les deux reliefs, 18 et 22, ont des formes générales en portions de circonférence, coaxiales à l'évidement 7, délimitées en regard des reliefs 16 et 20 par des surfaces latérales coaxiales à ces demi-bossages.

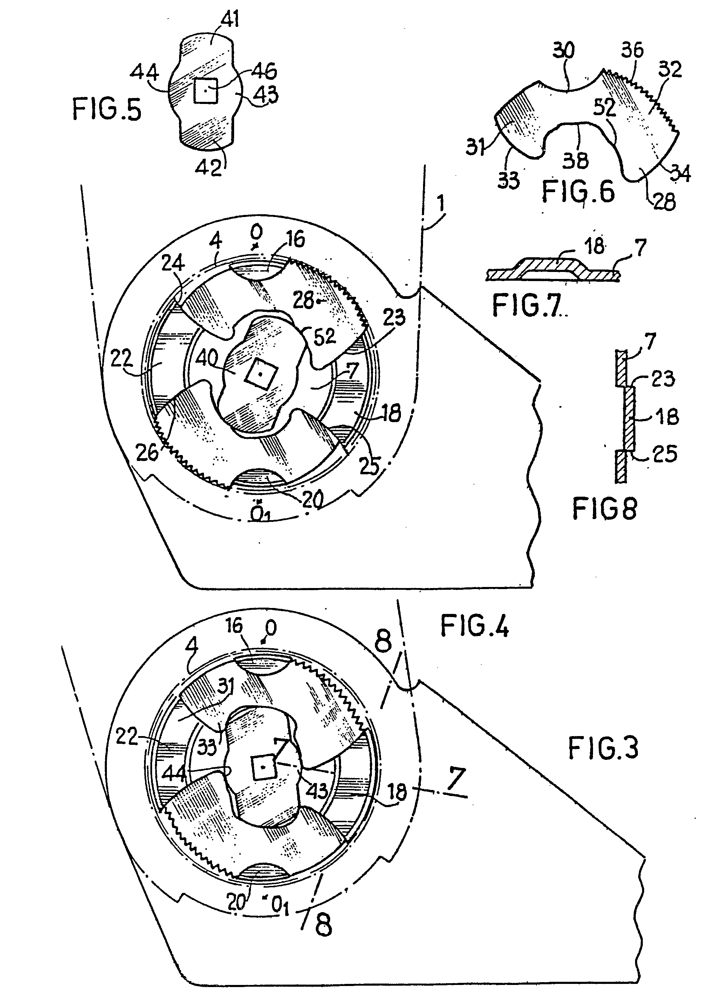

Comme le montrent plus clairement les figures 3, 4, 7 et 8, en regard du relief 16 les reliefs ou pontets 18 et 22 sont délimités par une surface incurvée, respectivement 23 et 24, qui est coaxiale à la surface latérale du relief 16, c'est-à-dire centrée au point O. De la même manière, à leur autre extrémité ces pontets 18 et 22 sont délimités par une surface latérale incurvée, respectivement 25 et 26, centrée sur le point $O_1$ c'est-à-dire coaxiale au demi-bossage 20.

Entre chacun des reliefs ou demi-bossages 16 et 20 et les deux pontets voisins, respectivement 22 et 18, est monté un cliquet 28 qui est emboîté entre les trois surfaces coaxiales respectivement 16, 23 et 24 ou 20, 25 et 26, et glisse sur ces surfaces. En effet, comme le montre plus clairement la figure 6, chacun des cliquets 28 a une forme générale en arc de cercle et comporte au voisinage de sa partie centrale, c'est-à-dire de son sommet, un évidement 30 en arc de cercle ayant un rayon et une dimension analogues à ceux du demi-bossage 16 ou 18. De part et d'autre de cet évidement 30 le cliquet 28 comporte deux bras de dimensions inégales, respectivement 31 et 32, qui sont chacun terminés par une surface incurvée, respectivement 33 et 34, qui est coaxiale à la paroi de l'évidement 30, et dont les rayons sont respectivement sensiblement égaux aux rayons 25 et 23 des reliefs de guidage. Le grand bras 32 porte une portion de denture 36 susceptible de venir en prise avec la denture de la couronne 4 du flasque mobile 1, tandis que le petit bras 31 est lisse.

Ce cliquet n'est pas lié au flasque mais est seulement solidement maintenu par les reliefs qui sont tous d'une seule pièce avec le flasque fixe. En effet les reliefs en contact avec les extrémités du cliquet sont constitués par des pontets dont les surfaces incurvées et même cylindriques 23 à 25 en contact avec le cliquet sont réalisées par découpage, tandis que les parties concentriques à l'axe de l'articulation sont raccordées au flasque fixe par des soyages obtenus par emboutissage; le relief 16, 20 en contact avec la partie centrale du cliquet est contitué par un demi-bossage, dont une partie présente un plan cylindrique de contact avec le cliquet, et dont l'autre côté est constitué d'un soyage concentrique à l'axe d'articulation, assurant la liaison de la partie relevée avec le flasque fixe. Le rayon de courbure de l'ensemble du cliquet 28 est inférieur à celui du logement 7 ou de la couronne dentée 4 de sorte que les deux bras 31 et 32 ne peuvent pas être simultanément en contact avec la couronne dentée 4. Bien entendu l'espace entre la surface extérieure de chacun des reliefs et le bord du logement 7 correspond sensiblement à la largeur de la couronne dentée 4, qui peut se placer entre eux.

Sur la face opposée à l'évidement 30, le cliquet 28 comporte un autre évidement 38 qui est profilé de telle manière que les extrémités du cliquet sont élargies et forment deux butées dirigées vers l'intérieur, tandis que la paroi de l'évidement 38 forme plusieurs courbes ou surfaces d'appui pour une came 40 de commande de ce cliquet.

Dans le mode de réalisation représenté, la came 40 étant destinée à déplacer deux cliquets 28, comporte deux lobes diamétralement opposés, respectivement 41 et 42, de largeur relativement importante, et entre ces lobes deux renflements arrondis, respectivement 43 et 44, de profondeur nettement inférieure à celle des lobes 41 et 42.

La came 40 est percée en son centre d'un trou carré 46 permettant le passage de l'extrémité, de section carrée, d'un levier 48 de commande de la manoeuvre de l'articulation. Un ressort 50, enroulé en hélice à l'intérieur du tube 12 solidaire du flasque fixe 2 et fixé d'une part à ce tube 12 et d'autre part à la came 40, rappelle cette came dans la position d'immobilisation de l'articulation.

Cette position d'immobilisation est représentée sur la figure 4, qui montre que la came 40 est alors en appui par chacun de ses lobes 41 et 42 sur une rampe incurvée 52 de chacun des cliquets 28. La portion de denture 36 est alors en prise avec la couronne dentée 4 du flasque mobile 1. Par ailleurs les trois surface coaxiales du cliquet 28 sont en contact étroit avec les trois surfaces coaxiales, respectivement des reliefs 18, 22 et 16 ou 20. Les flasque mobile 1. Par ailleurs les trois surfaces c'est-à-dire immobilisés.

Dans une telle position tout effort exercé sur le flasque 1, indiqué en trait interrompu sur la figure 4, et tendant à rapprocher ce flasque 1 du flasque fixe 2, a pour effet de serrer davantage le cliquet 28 contre la surface 26 ou 23 du pontet 18 ou 22 voisin. Un tel effort applique en outre ce cliquet contre la came 40 en la repoussant en direction de l'autre cliquet, c'est-à-dire en renforçant le contact entre ces organes. Un effort exercé sur le flasque 1 en sens inverse aurait un effet analogue puisqu'il appliquerait le cliquet 28 sur les surfaces 24, 25 des pontets adjacents.

Lorsque le dossier du siège, c'est-à-dire le flasque mobile 1, doit être déplacé le levier 48 est actionné pour faire pivoter la came 40 entre la position représentée sur la figure 4 et celle représentée sur la figure 3. Au cours de ce pivotement les lobes, respectivement 41 et 42, de la came 40, viennent buter contre l'extrémité de la surface 33 du petit bras 31 de chacun des cliquets 28 et repoussent ce petit bras 31 en direction de la couronne dentée 4. Le cliquet 28 pivote alors sur le demi-bossage 16 ou 20 et le long des surfaces 24 et 23, ou 25 et 26, coaxiales à ce demi-bossage. Au cours de ce pivotement l'extrémité de la surface 28 vient buter contre le renflement 43 ou 44 de la came 40, tandis que chacun des lobes 41 et 42 entre en contact avec le fond de l'évidement 38 de ce même cliquet. La came 40 est ainsi en contact en trois points avec la paroi de l'évidement 38 de chacun des cliquets 28, ce qui assure une immobilisation parfaite de ces organes les uns par rapport aux autres. Par contre, la portion de denture 36 est dégagée de la couronne dentée 4 et le flasque mobile 1 peut être déplacé librement autour de l'ensemble formé par les cliquets et les reliefs et être amené dans la position désirée.

Une fois cette position choisie, le levier 48 peut être relâché et le ressort 50 ramène automatiquement la came 40 dans la position de verrouillage représentée sur la figure 4.

Bien entendu le logement 7 est fermé, sur sa face opposée au flasque mobile 1, par une plaque de retenue 54 (fig. 2), qui est de préférence soudée en différents points sur les reliefs 16, 18, 20 et 22. De cette manière les cliquets 28 sont emprisonnés latéralement entre cette plaque de retenue 54 et le fond du logement 7 du flasque 2. Ils sont en outre emboîtés entre les trois surfaces coaxiales des reliefs de ce logement et la came 40 qui les commande. Les reliefs étant d'une seule pièce avec le flasque 2, tandis que les cliquets eux, ne sont liés à ce flasque par aucun organe susceptible d'être rompu et qu'en outre il n'est prévu dans ce dispositif aucune lumière, ni autre élément d'affaiblissement, l'ensemble de l'articulation présente une grande robustesse et une grande résistance contre les efforts soudains, accidentels ou non, exercés sur le dossier c'est-à-dire sur le flasque mobile 1.

Le fonctionnement de l'articulation reste cependant aussi simple que celui des articulations habituelles, tandis que sa réalisation est nettement moins complexe et peut être effectuée à un coût relativement faible.

## Revendications

1. Dispositif d'articulation entre l'assise et le dossier d'un siège, et notamment d'un siège de véhicule automobile, ou analogue, comportant un flasque fixe (2) muni d'un logement circulaire, un flasque mobile (1) solidaire d'une couronne dentée intérieurement (4) s'emboîtant dans le logement (7) du flasque fixe et, entre les flasques, au moins un cliquet pivotant (28) qui présente une forme générale incurvée, de rayon inférieur à celui de la couronne dentée, et des faces latérales extrêmes en arc de cercle (30, 33, 34), et qui porte une portion de denture (36) en regard de la couronne dentée, à chaque extrémité du cliquet un relief (16, 18, 20, 22) en saillie sur le fond du logement, qui présente des faces de forme correspondant à celles du cliquet, et une came (40) mobile entre une position de verrouillage de l'articulation dans laquelle elle maintient la denture (36) en prise avec la couronne dentée, et une position de réglage dans laquelle elle libère la denture pour permettre le déplacement relatif des flasques, caractérisé en ce qu'il comporte au moins trois reliefs (16, 18, 20, 22) qui délimitent trois surfaces (16, 23, 24, 20, 25, 26) de guidage du pivotement du cliquet (28) qui sont coaxiales et ont leur centre commun (0, $0_1$) situé sur la périphérie du logement, ou même à l'extérieur de celui-ci, et qui sont constamment en contact respectivement aves les trois faces latérales en arc de cercle (30, 33, 34) du cliquet, qui ont le même centre et sont voisines, respectivement du sommet et des extrémités du cliquet de sorte que ce dernier est maintenu uniquement par emboîtement entre les reliefs et la came et, sous l'action de cette dernière, glisse sur les surfaces de pivotement et pivote autour d'un axe fictif passant par leur centre (0, O₁), entre les positions de verrouillage et de déverrouillage.

2. Dispositif suivant la revendication 1, caractérisé en ce que le relief central (16) du flasque fixe est délimitée par une surface latérale en portion de cercle, qui coopère avec un évidement (30) de forme complémentaire ménagé dans la face extérieure du cliquet (28), à proximité de la portion de denture (36).

3. Dispositif suivant la revendication 2, caractérisé en ce que chaque cliquet (28) comporte, de part et d'autre de l'évidement (30), respectivement un bras long (32) denté extérieurement, et un bras plus court (31).

4. Dispositif suivant l'une des revendications 1 à 3, caractérisé en ce que le cliquet (28) comporte, sur sa face opposée à la denture (36), un évidement (38) dont la paroi est profilée et forme plusieurs courbes successives, tandis que les extrémités du cliquet sont élargies.

5. Dispositif suivant l'une des revendications 1 à 4, caractérisé en ce que les reliefs (16, 18, 20, 22) sont tous éloignés de la périphérie du logement (7), d'une distance sensiblement égale à la largeur de la couronne dentée (4) du flasque mobile (2).

6. Dispositif suivant l'une des revendications 1 à 5, caractérisé en ce que la came (40) de commande du cliquet comporte au moins un lobe large (41, 42) et une renflement latéral arrondi (43, 44), de moindre épaisseur que le lobe, l'extrémité du cliquet proche de la denture venant en appui contre ce renflement lorsque le lobe repousse l'autre extrémité du cliquet en vue de la libération de la couronne dentée.

7. Dispositif suivant l'une des revendications 1 à 6, caractérisé en ce qu'il comporte quatre reliefs (16, 18, 20, 22) symétriques deux à deux par rapport au centre du logement (7), deux cliquets (28) pivotant entre ces reliefs, et une came de commande (40) comportant deux lobes larges (41, 42) diamétralement opposés, et deux renflements arrondis (43, 44), également diamétralement opposés, entre ces deux lobes.

8. Dispositif suivant l'une des revendications 6 et 7, caractérisé en ce que chaque cliquet (28) comporte une partie étroite délimitée par l'évidement interne (38) et la surface concave de pivotement (30) et deux butées extrêmes dirigées vers l'intérieur et venant en contact respectivement avec le lobe (41) et le renflement (43) de la came lors du déverrouillage, et entre la partie étroite et la butée la plus proche de la denture (36), une rampe (52) d'appui du lobe (41) en vue de verrouillage.

9. Dispositif suivant l'une des revendications 1 à 8, caractérisé en ce que le cliquet (28) a une épaisseur voisine de la distance entre les deux flasques (1 et 2) et est maintenu entre eux par le seul contact avec les surfaces de pivotement.

**Patentansprüche**

1. Gelenk zwischen dem Sitzteil und der Rücklehne eines Sitzes, insbesondere eines Kraftfahrzeugsitzes oder dgl.,
— mit einem feststehenden Flansch (2), der mit einer kreisförmigen Aufnahme versehen ist,
— mit einem beweglichen Flansch (1), der mit einem innen verzahnten Kranz (4) versehen ist, der in die Aufnahme (7) des feststehenden Flansches eingefügt ist,
— mit wenigstens einer zwischen den Flanschen angeordneten schwenkbaren Sperrklinke (28), die eine gekrümmte Gesamtform hat mit kleinerem Radius als derjenige des Zahnkranzes und mit kreisbogenförmigen Endseitenflächen (30, 33, 34) und die gegenüber dem Zahnkranz einen Zahnungsteil (36) trägt, wobei an jedem Ende der Sperrklinke auf dem Boden der Aufnahme eine Erhebung (16, 18, 20, 22) mit Flächen übersteht, deren Form derjenigen der Sperrklinke entspricht, und
— mit einem Nocken (40), der beweglich ist zwischen einer Verriegelungsstellung des Gelenks, in der er die Verzahnung (36) in Eingriff mit dem Zahnkranz hält, und einer Einstellstellung, in der er die Verzahnung freigibt, um eine gegenseitige Bewegung der Flansche zu ermöglichen, gekennzeichnet
— durch wenigstens drei Erhebungen (16, 18, 20, 22), die drei koaxiale Flächen (16, 23, 24, 20, 25, 26) zur Führung der Schwenkung der Sperrklinke (28) begrenzen, deren gemeinsame Mitte (0, O₁) auf dem Umfang der Aufnahme oder sogar außerhalb hiervon liegt und die in ständiger Berührung mit den jeweiligen drei kreisbogenförmigen Seitenflächen (30, 33, 34) der Sperrklinke sind, die dieselbe Mitte haben und dem Scheitel sowie den Enden der Sperrklinke derart benachbart sind, daß letztere allein durch Einfügung zwischen den Erhebungen und dem Nocken gehalten wird, unter der Wirkung des letzteren auf den Schwenkflächen gleitet und zwischen den Ver- und Entriegelungsstellungen um eine durch ihre Mitte (0, O₁) gehende gedachte Achse schwenkt.

2. Vorrichtung nach Anspruch 1, dadurch gekennzeichnet,
— daß die mittlere Erhebung (16) des feststehenden Flansches durch eine kreisförmige Seitenfläche begrenzt ist, die mit einer komplementären ausnehmung (30) zusammenarbeitet, die in der Außenseite der Sperrklinke (28) in Nähe der Verzahnung (36) ausgebildet ist.

3. Vorrichtung nach Anspruch 2, dadurch gekennzeichnet,
— daß jede Sperrklinke (28) beiderseits der Ausnahmung (30) einen außenverzahnten langen Schenkel (32) bzw. einen kürzeren Schenkel (31) aufweist.

4. Vorrichtung nach Anspruch 1 bis 3, dadurch gekennzeichnet,

— daß die Sperrklinke (28) auf ihrer der Verzahnung (36) gegenüberliegenden Seite eine Ausnehmung (38) aufweist, deren Wand profiliert ist und mehrere aufeinanderfolgende Kurven bildet, während die Enden der Sperrklinke verbreitert sind.

5. Vorrichtung nach Anspruch 1 bis 4, dadurch gekennzeichnet,

—daß alle Erhebungen (16, 18, 20, 22) vom Umfang der Aufnahme (7) in einem Abstand angeordnet sind, der im wesentlichen gleich der Breite des Zahnkranzes (4) des beweglichen Flansches (2) ist.

6. Vorrichtung nach einem der Ansprüche 1 bis 5, dadurch gekennzeichnet,

— daß der Nocken (40) zur Steuerung der Sperrklinke wenigstens eine breite Nockenerhebung (41, 42) und eine abgerundete seitliche Ausbauchung von geringerer Dicke als die Nockenerhebung aufweist,

— wobei das der Verzahnung nahegelegene Ende der Sperrklinke an dieser Ausbauchung in Anlage kommt, wenn die Nockenerhebung das andere Ende der Sperrklinke zur Freigabe des Zahnkranzes zurückdrückt.

7. Vorrichtung nach einem der Ansprüche 1 bis 6, gekennzeichnet

— durch vier paarweise zur Mitte der Ausnehmung (7) symmetrische Erhebungen (16, 18, 20, 22),

— durch zwei zwischen diesen Erhebungen schwenkbare Sperrklinken (28) und

— durch einen Steuernocken (40) mit zwei diametral gegenüberliegenden breiten Nockenerhebungen (41, 42) und mit zwei abgerundeten, ebenfalls diametral gegenüberliegenden Ausbauchungen (43, 44) zwischen den beiden Nockenerhebungen.

8. Vorrichtung nach einem der Ansprüche 6 und 7, dadurch gekennzeichnet,

— daß jede Sperrklinke (28) aufweist: einen schmalen Teil, der durch die innere Ausnehmung (38) und die konkave Schwenkfläche (30) begrenzt ist, zwei Endanschläge, die nach innen gerichtet sind und beim Entriegeln mit der Nockenerhebung (41) bzw. der Ausbauchung (43) des Nockens in Berührung kommen, und eine zwischen dem schmalen Teil und dem der Verzahnung (36) an nächsten gelegenen Anschlag befindliche Rampe (52) zur Anlage der Nockenerhebung (41) für die Entriegelung.

9. Vorrichtung nach einem der Ansprüche 1 bis 8, dadurch gekennzeichnet,

— daß die Dicke der Sperrklinke (28) dem Abstand zwischen den beiden Flanschen (1 und 2) nahekommt und durch die alleinige Berührung mit den Schwenkflächen zwischen ihnen gehalten wird.

## Claims

1. A pivot device between the cushion and the backrest of a seat, and in particular a motor vehicle seat, or the like, comprising a fixed side wall (2) provided with a circular recess, a movable side wall (1) connected to an internally toothed ring (4) which is fitted in the recess (7) of the fixed side wall and, between the side walls, at least a pivotal pawl (28) which has a generally curved shape whose radius is less than that of the toothed ring, and end lateral surfaces in the shape of an arc of a circle (30, 33, 34), and which carries a portion of a set of teeth (36) in confronting relation to the toothed ring, at each end of the pawl a projection (16, 18, 20, 22) projecting from the bottom of the recess which has surfaces of a shape corresponding to those of the pawl, and a cam (40) movable between a position for locking the pivot in which it maintains the set of teeth (36) engaged with the toothed ring, and an adjusting position in which it releases the set of teeth in order to allow the relative displacement of the side walls, characterized in that it comprises at least three projections (16, 18, 20, 22) which define three guiding surfaces (16, 23, 24, 20, 25, 26) for the pivoting of the pawl (28) which are coaxial and have their common centre ($0$, $0_1$) located on the periphery of the recess, or even outside the latter, and which are constantly in contact respectively with the three lateral surface in the shape of an arc of a circle (30, 33, 34) of the pawl, which have the same centre and are respectively in the neighbourhood of the apex and the ends of the pawl so that the latter is maintained solely by a fitting between the projections and the cam and, under the action of the latter, slides on the pivoting surfaces and pivots about an imaginary axis passing through their centre ($0$, $0_1$) between the locking and unlocking positions.

2. A device according to claim 1, characterized in that the central projection (16) of the fixed side walls is defined by a lateral surface in the shape of a portion of a circle which cooperates with a cavity (30) of complementary shape formed in the outer surface of the pawl (28) in the vicinity of the portion of the set of teeth (36).

3. A device according to claim 2, characterized in that each pawl (28) has, on each side of the cavity (30), respectively a long arm (32) having external teeth, and a shorter arm (31).

4. A device according to one of the claims 1—3, characterized in that the pawl (28) has, on its side opposed to the set of teeth (36), a cavity (38) whose wall is profiled and forms a plurality of successive curves, while the ends of the pawl are widened.

5. A device according to one of the claims 1—4, characterized in that the projections (16, 18, 20, 22) are all remote from the periphery of the recess (7) by a distance substantially equal to the width of a toothed ring (4) of the movable side wall (2).

6. A device according to one of the claims 1—5, characterized in that the cam (40) controlling the pawl has at least one large lobe (41, 42) and a rounded lateral enlargement (43, 44) which is thinner than the lobe, the end of the pawl adjacent to the set of teeth bearing against this enlargement when the lobe urges the other end of the pawl for the purpose of releasing the toothed ring.

7. A device according to one of the claims 1—6, characterized in that it comprises four projections (16, 18, 20, 22) which are symmetrical in pairs relative to the centre of the recess (7), two pawls (28) pivoting between said projections, and a control cam (40) having two diametrically opposed large lobes (41, 42) and two rounded enlargements (43, 44) which are disposed also in diametrically opposed relation between these two lobes.

8. A device according to one of the claims 6 and 7, characterized in that each pawl (28) has a narrow part defined by the internal cavity (38) and the concave pivoting surface (30) and two end abutments extending toward the interior and respectively coming into contact with the lobe (41) and the enlargement (43) of the cam when unlocking, and between the narrow part and the abutment the closest to the set of teeth (36), a ramp (52) against which the lobe (41) bears for the locking.

9. A device according to one of the claims 1—8, characterized in that the pawl (28) has a thickness in the neighbourhood of the distance between the two side walls (1 and 2) and is maintained therebetween merely by the contact with the pivoting surfaces.

0 024 976

FIG.2

FIG.1

FIG.5

FIG.6

FIG.7.

FIG8

FIG.4

FIG.3